# EUROPÄISCHE PATENTSCHRIFT

(11) **EP 2 717 110 B1**
(45) Veröffentlichungstag und Bekanntmachung des Hinweises auf die Patenterteilung: **26.08.2015**
(21) Anmeldenummer: 12006873.9
(22) Anmeldetag: 04.10.2012
(51) Int. Cl.: G05D 1/02

(54) **Selbstfahrendes Arbeitsgerät mit einer Ladestation**
Self-propelled work device with a charging station
Appareil de travail autopropulsé avec station de chargement

(43) Veröffentlichungstag der Anmeldung: 09.04.2014
(73) Patentinhaber: Viking GmbH, 6336 Langkampfen-Kufstein (AT)
(72) Erfinder: Dr. Hans, Matthias, 83088 Kiefersfelden (DE)
(74) Vertreter: Wasmuth, Rolf

(56) Entgegenhaltungen:
- EP-A1- 2 416 215
- EP-A2- 2 412 223
- WO-A1-94/08280
- WO-A1-99/38056

## Beschreibung

Die Erfindung betrifft ein Verfahren zum Einfahren eines selbstfahrenden, akkubetriebenen Arbeitsgerätes in eine Ladestation sowie eine Vorrichtung aus einem akkubetriebenen, selbstfahrenden Arbeitsgerät und einer Ladestation.

Selbstfahrende, akkubetriebene Arbeitsgeräte sind z. B. als sogenannte Robotermäher bekannt Die zu mähende Rasenfläche wird durch einen Randbegrenzungsdraht abgegrenzt, der als Drahtschleife ausgebildet ist und mit seinen Enden mit einer Sendeeinheit verbunden ist. Diese Sendeeinheit sendet Signale vorgegebener Frequenz oder Form auf den Randbegrenzungsdraht, wobei die Signale von einer Empfangseinheit im Robotermäher empfangen und ausgewertet werden. Dabei hat der Randbegrenzungsdraht die Aufgabe, dem Robotermäher eine Information darüber zu ermöglichen, ob er innerhalb oder außerhalb der vom Randbegrenzungsdraht umgebenen Fläche fährt.

Wird der Akku des Arbeitsgerätes schwach, so muss dieser in einer Ladestation aufgeladen werden. Hierzu ist im Bereich der Ladestation eine zusätzliche Schleife verlegt, deren Signale der Robotermäher nur dann empfängt, wenn er sich in der Nähe der Ladestation befindet. Muss der Akku aufgeladen werden, führen entsprechend empfangene Signale dazu, dass der Robotermäher in die Ladestation einfährt. Der hierbei notwendige technische Aufwand zum Einfahren in die Ladestation ist erheblich.

Aus der EP 2 412 223 A2 ist ein selbstfahrendes Arbeitsgerät bekannt, welches innerhalb eines Randbegrenzungsdrahtes arbeitet. Neben dem Suchdraht ist eine innere Drahtschleife vorgesehen, über die die Einfahrt des Arbeitsgerätes in die Ladestation ausgeführt wird.

Die WO 99/38056 A1 offenbart eine äußere Drahtschleife zur Begrenzung des Arbeitsbereiches eines selbstfahrenden Arbeitsgerätes sowie ein oder mehrere Suchschleifen zur Führung des Arbeitsgerätes zu einer Ladestation. Eine Zielfahrt zur Ladestation wird erst dann eingeleitet, wenn das Arbeitsgerät einen Suchdraht erkennt, um dann längs des Suchdrahtes in die Ladestation, einzufahren.

Die WO 94/08280 A1 offenbart ein Verfahren zur Richtungsänderung eines selbstfahrenden Arbeitsgerätes nach Auftreffen auf ein Hindernis.

Der Erfindung liegt die Aufgabe zugrunde, ein Verfahren zum Einfahren eines selbstfahrenden, akkubetriebenen Arbeitsgerätes in eine Ladestation anzugeben, welches einfach und sicher eine zielgerichtete Einfahrt des Arbeitsgerätes in die Ladestation gewährleistet.

Ferner soll eine Vorrichtung angegeben werden, mit der das erfindungsgemäße Verfahren in einfacher Weise bei geringem technischem Aufwand umsetzbar ist.

Nach dem im Anspruch 1 angegebenen Verfahren wird der Robotermäher dann eine Zielfahrt auslösen, wenn der Akku schwach wird, z. B. die Akkuspannung unter einen vorgegebenen Grenzwert fällt. Die Zielfahrt zur Ladestation wird wie folgt gesteuert:
Zunächst wird das Arbeitsgerät in einfacher Vorwärtsfahrt angetrieben, bis der Randbegrenzungsdraht erreicht ist. Nunmehr wird sich der Robotermäher in Richtung des Randbegrenzungsdrahtes ausrichten und längs des Randbegrenzungsdrahtes zur Ladestation fahren, wobei es unerheblich ist, ob er in die eine oder in die andere Richtung längs des Randbegrenzungsdrahtes fährt.

Da der Randbegrenzungsdraht den Suchdraht der Ladestation kreuzt, wird bei der Vorbeifahrt an der Ladestation sowohl das erste Signal auf dem Randbegrenzungsdraht als auch das zweite Signal auf dem Suchdraht empfangen. Die Steuerung erkennt die empfangenen Signale als unterschiedliche Signale und wertet diese unterschiedlich aus. Bei der Vorbeifahrt an der Ladestation wird somit das auf dem Suchdraht gesendete zweite Signal erkannt und ausgewertet, um am Ende der Vorbeifahrt an der Ladestation das Arbeitsgerät zu stoppen. Der Anhaltepunkt des Arbeitsgerätes ist dabei abhängig von der Auswertung des empfangenen zweiten Signals des Suchdrahtes. Aus dieser gestoppten Lage des Arbeitsgerätes wird eine Rückwärtsfahrt in einer Kurve eingeleitet, die zur Ausrichtung des Arbeitsgerätes vor der Ladestation dient.

Durch die Rückwärtsfahrt des Arbeitsgerätes in einer Kurve wird das Arbeitsgerät vor der Ladestation derart ausgerichtet, dass die Längsmittelachse des Arbeitsgerätes etwa gleichachsig zur Längsmittelachse der Ladestation liegt. Nunmehr erfolgt die Vorwärtsfahrt des Arbeitsgerätes und das Einfahren in die Ladestation bis zum Erreichen einer Ladestellung. Dabei werden die von den Empfangsspulen im Frontteil bzw. in der Nase des Arbeitsgerätes abgegebenen Signale gegeneinander verglichen und entsprechend der Differenz der Signale die Fahrtrichtung nach rechts oder links korrigiert. Es erfolgt somit ein geregeltes Einfahren in die Ladestation, bis die Ladestellung erreicht ist, also der Ladedorn der Ladestation in die Ladeöffnung des Arbeitsgerätes eingefahren ist und den elektrischen Ladekontakt hergestellt hat.

Das erfindungsgemäße Verfahren hat den Vorteil, dass immer dann, wenn die Steuerung ein Aufladen des Akkus auslöst, eine gleiche Zielfahrt eingeleitet und ausgeführt wird. Die für die Einfahrt in die Ladestation benötigte elektrische Energie kann sicher kalkuliert werden, so dass der notwendige Grenzwert zum Aufladen der Batterie derart gewählt werden kann, dass lange Betriebszeiten des Akkumähers möglich sind.

Die eingedockte Ladestellung des Arbeitsgerätes in der Ladestation wird mit Schließen der Ladekontakte erkannt und durch eine Änderung des Signals auf dem Suchdraht angezeigt. In Abhängigkeit der Änderung des Signals auf dem Suchdraht wird die Steuerung den Fahrantrieb abschalten; die Zielfahrt ist erfolgreich abgeschlossen.

In einfacher Weise wird die Änderung des Signals auf dem Suchdraht durch eine Änderung der Frequenz erreicht.

Das auf dem Suchdraht gesendete zweite Signal liegt in den Signalpausen des auf dem Randbegrenzungsdraht gesendeten ersten Signals. Dadurch ist eine einfache Synchronisation mit der Steuerung des Arbeitsgerätes möglich, so dass dieses sicher die auf dem Suchdraht gesendeten Signale von denen auf dem Randbegrenzungsdraht gesendeten Signale unterscheiden kann.

In vorteilhafter Weiterbildung der Erfindung ist vorgesehen, dem Signal auf dem Randbegrenzungsdraht ein Rückrufsignal zu überlagern. Immer dann, wenn das Arbeitsgerät in den Sendebereich des Randbegrenzungsdrahtes einfährt und das Rückrufsignal empfängt, wird die Steuerung die Zielfahrt zur Ladestation wie beschrieben einleiten und ausführen.

Eine Vorrichtung aus einem selbstfahrenden, akkubetriebenen Arbeitsgerät und einer Ladestation zur Ausführung des Verfahrens ist im Anspruch 8 angegeben. Das Arbeitsgerät bewegt sich innerhalb einer durch einen Randbegrenzungsdraht begrenzten Fläche, wobei die Ladestation einen Suchdraht aufweist, der den Randbegrenzungsdraht unter einem vorgegebenen Winkel kreuzt. Auf dem Randbegrenzungsdraht ist ein erstes Signal und auf dem Suchdraht ein zweites Signal aufgegeben, die von einer Empfangsspule im Arbeitsgerät empfangen werden. In einer Steuerung des Arbeitsgerätes werden die Signale als unterschiedliche Signale erkannt und ausgewertet und abhängig von der Auswertung der Fahrantrieb des Arbeitsgerätes gesteuert.

Vorteilhaft ist der Suchdraht eine im Wesentlichen rechteckige Suchschleife, wobei die Suchschleife symmetrisch zu einer Längsmittelachse durch einen Ladeanschluss der Ladestation ausgebildet liegt. Die einen Seiten der Suchschleife liegen zur Längsmittelachse der Ladestation im Wesentlichen parallel, während die anderen Seiten der Suchschleife zu einer Längsmittelachse der Ladestation in einem Winkel liegen. Bevorzugt ist der Winkel ein rechter Winkel.

Im Arbeitsgerät sind zwei Empfangsspulen vorgesehen, die symmetrisch zu einer Längsmittelachse des Arbeitsgerätes liegen. Der Abstand der Empfangsspulen ist dabei kleiner gewählt als die quer zur Längsmittelachse gemessene Breite der Suchschleife, so dass sowohl bei der Vorbeifahrt an der Ladestation als auch beim geregelten Einfahren in die Ladestellung beide Empfangsspulen in Draufsicht innerhalb der Suchschleife der Ladestation liegen.

Weitere Merkmale der Erfindung ergeben sich aus den weiteren Ansprüchen, der Beschreibung und der Zeichnung, in der nachfolgend ein im Einzelnen beschriebenes Ausführungsbeispiel der Erfindung dargestellt ist. Es zeigen:
- Fig. 1: in schematischer Darstellung eine Vorrichtung aus einem selbstfahrenden, akkubetriebenen Arbeitsgerät mit einer Ladestation,
- Fig. 2: ein Signalbild der auf einem Randbegrenzungsdraht und einem Suchdraht gesendeten Signale,
- Fig. 3: eine Prinzipdarstellung des selbstfahrenden Arbeitsgerätes in Vorwärtsfahrt in Richtung auf den Randbegrenzungsdraht,
- Fig. 4: eine Prinzipdarstellung des selbstfahrenden Arbeitsgerätes in seiner Fahrt längs des Randbegrenzungsdrahtes,
- Fig. 5: eine Prinzipdarstellung des selbstfahrenden Arbeitsgerätes in der Vorbeifahrt an der Ladestation,
- Fig. 6: eine schematische Darstellung des im Arbeitsgerät an eine Steuerung abgegebenen Ausgangssignals der Empfangsspulen bei Empfang des Signals des Suchdrahtes,
- Fig. 7: eine Prinzipdarstellung des selbstfahrenden Arbeitsgerätes in Rückwärtsfahrt nach Vorbeifahrt an der Ladestation gemäß Fig. 5,
- Fig. 8: eine Prinzipdarstellung des Arbeitsgerätes bei Einfahrt in die Ladestation bis zum Erreichen einer Ladestellung.

Die erfindungsgemäße Vorrichtung besteht aus einem selbstfahrenden, akkubetriebenen Arbeitsgerät 1 und einer Ladestation 2, die zum Aufladen eines im Arbeitsgerät vorgesehenen Akkus 3 von dem Arbeitsgerät 1 angefahren werden muss.

Das im Ausführungsbeispiel gezeigte Arbeitsgerät 1 ist ein Robotermäher 4 zum Mähen einer Rasenfläche. Die vom Arbeitsgerät 1 zu bearbeitende Fläche 6 ist von einem Randbegrenzungsdraht 5 begrenzt, der als Schleife verlegt ist, deren Enden mit einer Sendeeinheit 7 in Verbindung stehen. Die Sendeeinheit 7 sendet in zeitlich festen Abständen ΔT Signale S1, die von Empfangsspulen 8, 10 im Arbeitsgerät 1 empfangen werden.

Die Empfangsspulen 8 und 10 sind - in Draufsicht gesehen - auf beiden Seiten einer Längsmittelachse 9 des Arbeitsgerätes 1 im vorderen Bereich 11 im Frontteil bzw. einer Nase des Gehäuses 12 vorgesehen. Zweckmäßig im hinteren Bereich 13 des Arbeitsgerätes sind zwei Antriebsräder 14, 15 vorgesehen, die jeweils einen elektrischen Fahrantrieb 16, 17 aufweisen. Die Anordnung der angetriebenen Antriebsräder kann auch vorne oder an anderer Stelle des Arbeitsgerätes erfolgen. Die dargestellten Fahrantriebe 16 und 17 der Antriebsräder 14, 15 sind von einer Steuerung 18 angesteuert, um das Arbeitsgerät 1 in Fahrtrichtung 30 nach vorne oder entgegen der Fahrtrichtung 30 nach hinten anzutreiben. Durch unterschiedlichen Antrieb der Fahrantriebe 16 und 17 sind Lenkbewegungen des Arbeitsgerätes 1 und somit Kurvenfahrten möglich. Unterhalb des vorderen Bereichs 11 ist ein - nicht dargestelltes - Stützrad vorgesehen, welches zweckmäßig als frei drehbares, also selbstlenkendes Schlepprad gestaltet ist.

Unterhalb des Gehäuses 12 ist ferner ein Arbeitswerkzeug 19 vorgesehen, das im Ausführungsbeispiel ein um eine vertikale Achse 20 rotierendes Messer 21 ist.

Im vorderen Bereich 11 zeigt das Gehäuse 12 ferner eine Ladeöffnung 24 zur Aufnahme eines Ladedorns 34 der Ladestation. Im gezeigten Ausführungsbeispiel ist die Ladeöffnung 24 als in Richtung der Längsmittelachse 9 ausgerichtete zylindrische Öffnung ausgebildet; es kann zweckmäßig sein, die Mündung der Ladeöffnung 24 trichterförmig erweitert auszubilden, um ein sicheres Einfahren des Ladedorns 34 beim Einfahren des Arbeitsgerätes 1 in die Ladestation 2 zu gewährleisten.

Die Ladestation 2 besteht im gezeigten Ausführungsbeispiel aus einer Bodenplatte 22, auf der die Sendeeinheit 7 montiert ist. Aus der Sendeeinheit 7 ragt - in Richtung der Längsmittelachse 23 der Ladestation 2 ausgerichtet - ein Ladedorn 34 mit nicht näher dargestellten Ladekontakten.

In der Bodenplatte 22 ist eine Suchschleife 25 eingelegt, die ebenfalls mit der Sendeeinheit 7 verbunden ist. Im gezeigten Ausführungsbeispiel ist die Suchschleife 25 als im Wesentlichen rechteckige Schleife mit einer Windung ausgestaltet; es kann zweckmäßig sein, mehrere Windungen oder auch eine andere Form der Suchschleife vorzusehen.

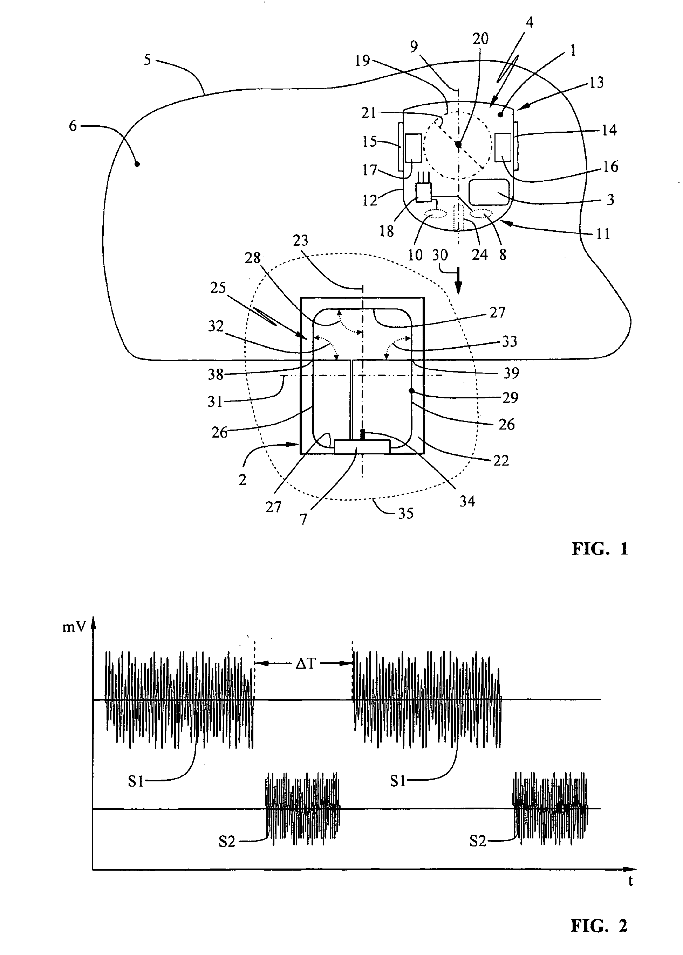

Die Suchschleife 25 ist mit der Sendeeinheit 7 verbunden, die auf dem Draht 29 der Suchschleife 25 Signale S2 sendet. Wie Fig. 2 zeigt, sind die Signale S2 auf der Suchschleife zeitlich derart synchronisiert, dass sie jeweils in den Pausen ΔT der Signale S1 auf dem Randbegrenzungsdraht 5 gesendet werden. Die zeitliche Dauer der Signale auf der Suchschleife 25 ist derart bemessen, dass sie kleiner, vorzugsweise deutlich kleiner als die Zeitspanne ΔT zwischen aufeinanderfolgenden Signalen S1 auf dem Randbegrenzungsdraht 5 sind.

Im gezeigten Ausführungsbeispiel liegt die im Wesentlichen rechteckige Suchschleife 25 symmetrisch zur Längsmittelachse 23, wobei die einen Seiten 26, die Längsseiten der Suchschleife 25, parallel zur Längsmittelachse 23 liegen, während die anderen Seiten 27, die Schmalseiten der rechteckförmigen Suchschleife 25, unter einem Winkel 28 zur Längsmittelachse 23 liegen. Der Winkel 28 ist bevorzugt ein rechter Winkel.

Wie die Prinzipdarstellung in Fig. 1 zeigt, kreuzt der Randbegrenzungsdraht 5 den Suchdraht 29 der Suchschleife 25 im Bereich der Ladestation 2. Im gezeigten Ausführungsbeispiel kreuzt der Randbegrenzungsdraht 5 den Suchdraht 29 der Suchschleife 25 im Bereich der einen Hälfte der Suchschleife 25, die vom Ladedorn 34 entfernt liegt. Der Randbegrenzungsdraht 5 verläuft nahe einer Mittellinie 31 der Suchschleife, wobei die Mittellinie 31 lotrecht zur Längsmittelachse 23 der Ladestation liegt.

Der Randbegrenzungsdraht 5 verläuft parallel zur Mittellinie 31, wobei der Abstand a zur Seite 27 der Schmalseite des Suchdrahtes 29 größer ist als der halbe Abstand E/2 zwischen den Empfangsspulen 8, 10.

Wie in Draufsicht aus Fig. 1 ersichtlich, ist der Kreuzungswinkel 32 zwischen den Längsseiten 26 der Suchschleife 25 etwa 90°, insbesondere ein rechter Winkel. Dabei ist der Kreuzungswinkel 32 auf der einen Längsseite 26 der Suchschleife 25 gleich groß wie der Kreuzungswinkel 33 auf der anderen Längsseite 26 der Suchschleife 25.

Die auf dem Randbegrenzungsdraht 5 gesendeten Signale S1 und die auf der Suchschleife 25 gesendeten Signale S2 sind Strompulse, die ein Magnetfeld erzeugen, welches von den Empfangsspulen 8 und 10 im vorderen Bereich 11 (Nase) des Arbeitsgerätes 1 empfangen werden. Die Grundlage für die Signalerkennung ist zunächst das Signal S1 auf dem Randbegrenzungsdraht. Das auf dem Randbegrenzungsdraht gesendete Bitmuster wird durch einen Zufallsgenerator gebildet, der deterministisch ist. Die Sendeeinheit 7 in der Ladestation 2 und die Steuerung 18 im Arbeitsgerät 1 kennen den Anfangswert des Zufallsgenerators und errechnen somit das gleiche Muster. Verschiedene Arbeitsgeräte verwenden verschiedene Anfangswerte, so dass immer nur das zur jeweiligen Ladestation 2 zugehörige Arbeitsgerät 1 das Signal erkennt, das dem Arbeitsgerät 1 zugeordnet ist. Die Signalerkennung selbst erfolgt in der Steuerung 18 durch ein Korrelationsverfahren. Aufgrund des Randbegrenzungssignals erkennt das Arbeitsgerät 1, ob es sich innerhalb oder außerhalb der Fläche 6 befindet. Die Steuerung erfolgt so, dass das Arbeitsgerät 1 sich ausschließlich innerhalb des Randbegrenzungsdrahtes 5, also in der durch den Randbegrenzungsdraht 5 begrenzten Fläche 6 bewegt.

Hat sich das Arbeitsgerät mit dem Randbegrenzungsdraht synchronisiert, ist es in der Lage, grundsätzlich auch das Signal S2 auf der Suchschleife 25 zu erkennen. Die Steuerung 18 weiß, wann zwischen den Signalen S1 auf dem Randbegrenzungsdraht 5 eine Pause ΔT auftritt, erwartet somit während dieser Pause ΔT keine weiteren Signale von den Empfangsspulen 8 und 10. Treten trotzdem Signale auf, so erkennt das Arbeitsgerät diese als die Signale S2 der Suchschleife 25. Ein Erkennen der auf der Suchschleife 25 gesendeten Signale S2 ist nur im Nahbereich 35 der Ladestation 2 möglich, wie in Fig. 1 strichliert angedeutet.

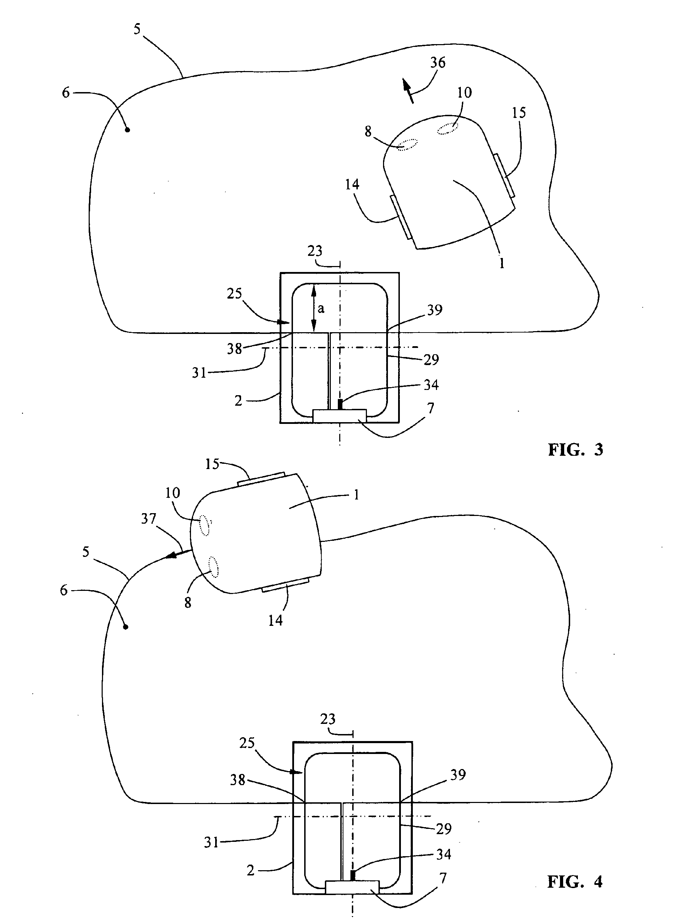

Wird der Akku 3 im Arbeitsgerät 1 schwächer, wird dies von der Steuerung 18 erkannt und eine Zielfahrt zur Ladestation 2 eingeleitet. Wie in Fig. 3 dargestellt, werden die Fahrantriebe 16 und 17 derart gesteuert, dass das Arbeitsgerät 1 eine Vorwärtsfahrt in Pfeilrichtung 36 ausführt, bis die Empfangsspulen 8 und 10 das Signal S1 auf dem Randbegrenzungsdraht 5 empfangen. Nun richtet die Steuerung 18 das Arbeitsgerät 1 derart aus, dass es längs des Randbegrenzungsdrahtes in Pfeilrichtung 37 fährt, also dem Randbegrenzungsdraht 5 folgt, wie in Fig. 4 dargestellt.

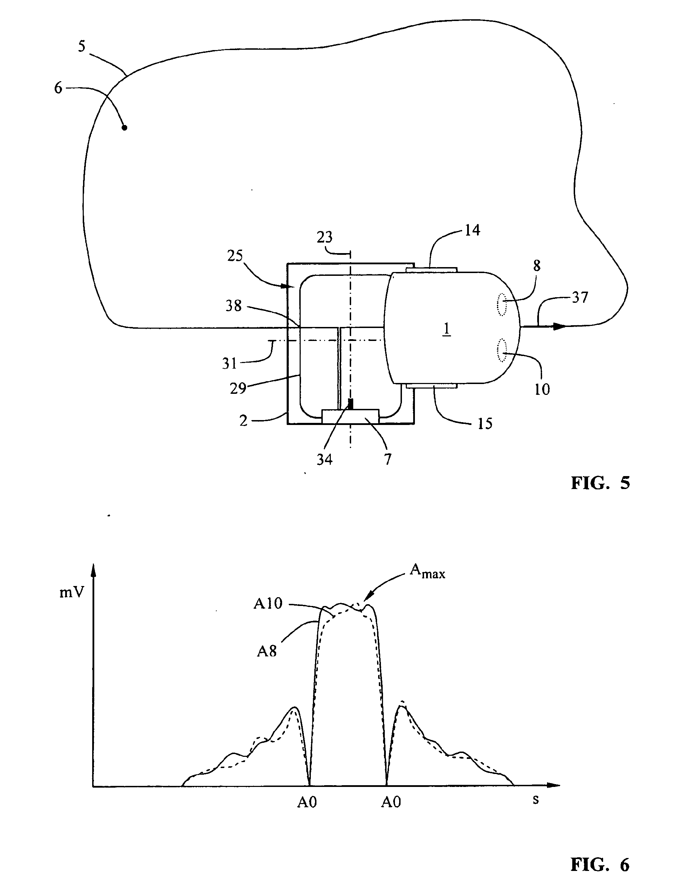

Das Arbeitsgerät 1 folgt dem Randbegrenzungsdraht 5 und überfährt die Kreuzungspunkte 38 und 39 mit dem Suchdraht 29. Bei der Annährung an den Suchdraht 29 der Suchschleife 25 nehmen die Ausgangssignale A8 und Δ10 (Fig. 6) der Empfangsspulen 8 und 10 langsam zu. Liegen die Sensoren 8 und 10 direkt über dem Suchdraht 29, ist kein Signal messbar; innerhalb der Suchschleife 25 des Suchdrahtes 29 geben die Empfangsspulen 8 und 10 ein maximales Signal Aₘₐₓ ab.

Überfahren die Empfangsspulen 8 und 10 den Suchdraht 29, ist das Ausgangssignal A0 Null. Anhand des auf dem Suchdraht 29 gesendeten Signals S2 und der von der Steuerung 18 vorgenommenen Synchronisierung zwischen dem Signal S1 auf dem Randbegrenzungsdraht 5 und dem Signal S2 auf dem Suchdraht 29 kann die Steuerung 18 aus dem Signalverlauf gemäß Fig. 6 ableiten, wo sich das Arbeitsgerät 1 relativ zur Ladestation 2 bzw. zum Suchdraht 29 befindet. Die Steuerung 18 des Arbeitsgerätes 1 registriert somit die Vorbeifahrt an der Ladestation 2 und stoppt das Arbeitsgerät dann, wenn die Vorbeifahrt abgeschlossen ist (Fig. 5).

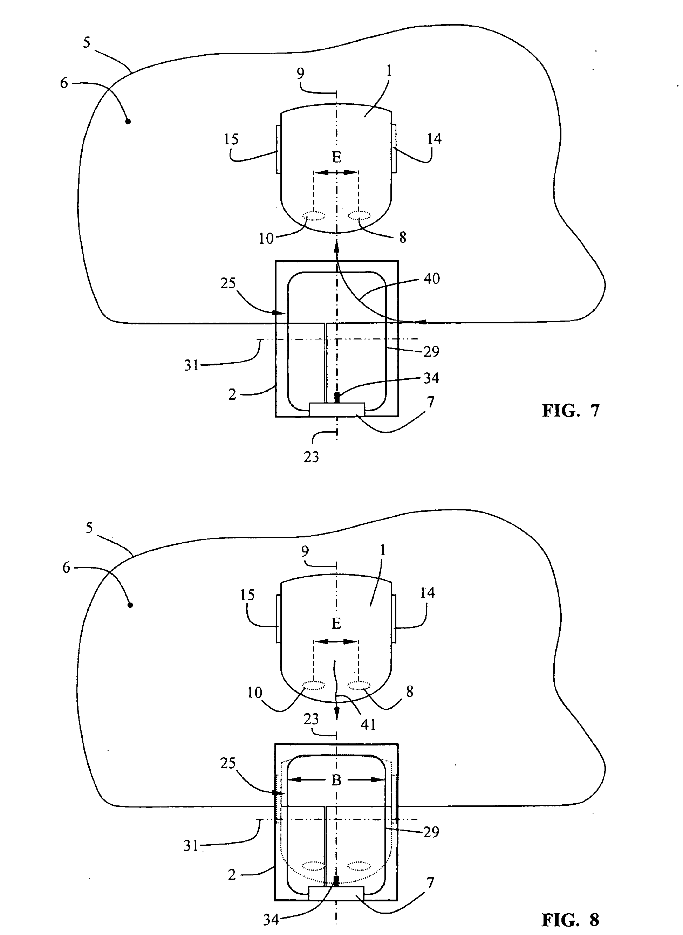

Nach der Vorbeifahrt an der Ladestation 2 und dem Stoppen des Arbeitsgerätes leitet die Steuerung 18 eine Rückwärtsfahrt auf einer Kurve 40 ein (Fig. 7), die dem Kreuzungswinkel 32, 33 zwischen dem Suchdraht 29 und dem Randbegrenzungsdraht 5 entspricht. Im gezeigten Ausführungsbeispiel ist die Kurve 40 eine 90°-Kurve.

Das Arbeitsgerät 1 stoppt nach der Vorbeifahrt durch Auswertung des empfangenen Signals S2 auf dem Suchdraht 29 an etwa immer gleicher Stelle und führt als Bewegungsablauf die Rückwärtsfahrt in einer Kurve 40 aus. Dadurch wird das Arbeitsgerät 1 vor der Ladestation 2 positioniert, um dann - wie Fig. 8 zeigt - in die Ladestation 2 geregelt einzufahren. Bei der Einfahrt in die Ladestation 2 in Pfeilrichtung 41 werden die Ausgangssignale A8 und A10 (Fig. 6) der Empfangsspulen 8 und 10 miteinander verglichen. Anhand dieses Vergleichs kann die Steuerung ein zielgerichtetes Einfahren des Arbeitsgerätes 1 in die Ladestation 2 bewirken, wobei die Ladeöffnung 24 genau auf den Ladedorn 34 ausgerichtet ist, so dass dieser ohne Störung in die Ladeöffnung 24 eintritt, um im Inneren des Arbeitsgerätes 1 Ladekontakte zu kontaktieren, über die ein dann folgendes Aufladen des Akkus 3 bewirkt wird.

Wie in Fig. 8 dargestellt, ist die quer zur Längsmittelachse 23 gemessene Breite B der Suchschleife 25 größer als der Abstand E der Empfangsspulen 8 und 10 im vorderen Bereich 11, also im Bereich der Nase des Arbeitsgerätes 1. Die Abstände E und B sind derart aufeinander abgestimmt, dass die beiden Empfangsspulen 8 und 10 bei der Einfahrt in die Ladestation 2 vollständig innerhalb der Suchschleife 25 des Suchdrahtes 29 liegen.

Ist das Arbeitsgerät 1 ordnungsgemäß in die Ladestation 2 eingefahren, wie strichpunktiert in Fig. 8 dargestellt, wird über den Ladedorn 34 ein Aufladestrom fließen. Die Kontaktierung des Ladedorns 34 mit Ladekontakten im Arbeitsgerät 1 wird von der Ladestation 2 erkannt und die Sendeeinheit 7 veranlasst, das auf der Suchschleife 25 gesendete Signal zu ändern. Zweckmäßig wird die Frequenz des auf dem Suchdraht 29 gesendeten Signals S2 geändert. Diese Signaländerung wird über die Empfangsspulen 8 und 10 von der Steuerung 18 erkannt, und die Fahrantriebe 16 und 17 werden abgeschaltet. Die Zielfahrt ist abgeschlossen.

In Weiterbildung der Erfindung kann dem Signal S1 auf dem Randbegrenzungsdraht ein Rückrufsignal überlagert werden, das von der Steuerung erkannt wird und - unabhängig von dem Ladezustand des Akkus 3 - zum Einleiten einer Zielfahrt zur Ladestation führt. Das Rückrufsignal kann von den Empfangsspulen 8 und 10 in der Nase des Arbeitsgerätes 1 jederzeit empfangen werden. Zweckmäßig ist auf der Ladestation eine Rückruftaste vorgesehen, nach deren Betätigung das Rückrufsignal gesendet wird.

## Patentansprüche

1. Verfahren zum Einfahren eines selbstfahrenden, akkubetriebenen Arbeitsgerätes (1) in eine Ladestation (2), wobei das Arbeitsgerät (1) einen aus einem Akku (3) gespeisten elektrischen Fahrantrieb (16, 17) aufweist, über den das Arbeitsgerät (1) innerhalb einer durch einen Randbegrenzungsdraht (5) begrenzten Fläche (6) verfahren wird, und mit einer Ladestation (2) zum Aufladen des Akkus (3), wobei die Ladestation (2) einen Suchdraht (29) aufweist, der den Randbegrenzungsdraht (5) unter einem vorgegebenen Winkel (32, 33) kreuzt, und auf den Randbegrenzungsdraht (5) ein erstes Signal (S1) und auf den Suchdraht (29) ein zweites Signal (S2) aufgegeben wird, die von mindestens einer Empfangsspule (8, 10) des Arbeitsgerätes (1) empfangen und in einer Steuerung (18) des Arbeitsgerätes (1) als unterschiedliche Signale (S1, S2) erkannt und ausgewertet werden **dadurch gekennzeichnet dass** abhängig von der Auswertung der Signale (S1, S2) der Fahrantrieb (16, 17) zum Ausführen einer Zielfahrt zur Ladestation (2) wie folgt gesteuert wird:
- Vorwärtsfahrt des Arbeitsgerätes (1) bis zum Erreichen des Randbegrenzungsdrahtes (5);
- Vorwärtsfahrt längs des Randbegrenzungsdrahtes (5) und Vorbeifahrt an der Ladestation (2);
- Anhalten des Arbeitsgerätes (1) am Ende der Vorbeifahrt an der Ladestation (2);
- Rückwärtsfahrt des Arbeitsgerätes (1) in einer Kurve (40) zur Längsausrichtung des Arbeitsgerätes (1) vor der Ladestation (2);
- Vorwärtsfahrt des Arbeitsgerätes (1) und geregeltes Einfahren in die Ladestation (2) bis zum Erreichen einer Ladestellung.

2. Verfahren nach Anspruch 1,
**dadurch gekennzeichnet, dass** die Ladestellung des Arbeitsgerätes (1) in der Ladestation (2) erkannt und durch eine Änderung des Signals (S2) auf dem Suchdraht (29) angezeigt wird.

3. Verfahren nach Anspruch 2,
**dadurch gekennzeichnet, dass** in Abhängigkeit der Änderung des Signals (S2) auf dem Suchdraht (29) der Fahrantrieb (16, 17) abgeschaltet wird.

4. Verfahren nach Anspruch 2 oder 3,
**dadurch gekennzeichnet, dass** das Signal (S2) auf dem Suchdraht (29) in der Frequenz geändert wird.

5. Verfahren nach einem der Ansprüche 1 bis 4,
**dadurch gekennzeichnet, dass** das auf dem Suchdraht (29) gesendete zweite Signal (S2) in den Signalpausen (ΔT) des auf den Randbegrenzungsdraht (5) gesendeten ersten Signals (S1) liegt.

6. Verfahren nach einem der Ansprüche 1 bis 5,
**dadurch gekennzeichnet, dass** dem Signal (S 1) auf dem Randbegrenzungsdraht (5) ein Rückrufsignal überlagert wird.

7. Verfahren nach Anspruch 6,
**dadurch gekennzeichnet, dass** die Steuerung (18) nach Empfang des Rückrufsignals eine Zielfahrt zur Ladestation (2) einleitet.

8. Vorrichtung aus einem selbstfahrenden, akkubetriebenen Arbeitsgerät (1) mit einem elektrischen Fahrantrieb (16, 17), der aus einem im Arbeitsgerät (1) angeordneten Akku (3) mit Energie versorgt ist, und einer Ladestation (2) zum Aufladen des Akkus (3), wobei das Arbeitsgerät (1) innerhalb einer durch einen Randbegrenzungsdraht (5) begrenzten Fläche (6) arbeitet, und die Ladestation (2) einen Suchdraht (29) aufweist, der den Randbegrenzungsdraht (5) unter einem vorgegebenen Winkel (32, 33) kreuzt, wobei auf den Randbegrenzungsdraht (5) ein erstes Signal (S1) und auf den Suchdraht (29) ein zweites Signal (S2) aufgegeben ist, die von mindestens einer Empfangsspule (8, 10) im Arbeitsgerät (1) empfangen und in einer Steuerung (18) des Arbeitsgerätes (1) als unterschiedliche Signale (S1, S2) erkannt und ausgewertet werden und abhängig von der Auswertung der Fahrantrieb (16, 17) des Arbeitsgerätes (1) gesteuert ist, wobei der Suchdraht (29) eine rechteckige Suchschleife (25) bildet, die symmetrisch zu einer Längsmittelachse (23) durch einen Ladedorn (34) der Ladestation (2) liegt

9. Vorrichtung nach Anspruch 8,
**dadurch gekennzeichnet, dass** die einen Seiten (26) der Suchschleife (25) zu einer Längsmittelachse (23) der Ladestation (2) parallel liegen.

10. Vorrichtung nach Anspruch 8 oder 9,
**dadurch gekennzeichnet, dass** die anderen Seiten (27) der Suchschleife (25) zu einer Längsmittelachse (23) der Ladestation (2) in einem Winkel (32, 33) liegen.

11. Vorrichtung nach Anspruch 10,
**dadurch gekennzeichnet, dass** der Winkel (32, 33) ein rechter Winkel ist.

12. Vorrichtung nach einem der Ansprüche 8 bis 11,
**dadurch gekennzeichnet, dass** im Arbeitsgerät (1) zwei symmetrisch zu einer Längsmittelachse (9) angeordnete Empfangsspulen (8, 10) vorgesehen sind.

13. Vorrichtung nach Anspruch 12,
**dadurch gekennzeichnet, dass** die quer zur Längsmittelachse (23) der Ladestation (2) gemessene Breite (B) der Suchschleife (25) größer ist als der Abstand (E) der Empfangsspulen (8, 10).

## Claims

1. Method for moving a self-propelled, battery-operated work unit (1) into a charging station (20), wherein the work unit (1) has an electric traction drive (16, 17) supplied by a battery (3), via which the work unit (1) is moved within an area (6) delimited by a perimeter wire (5), and having a charging station (2) for charging the battery (3), wherein the charging station (2) has a search wire (29) which crosses the perimeter wire (5) at a predefined angle (32, 33), and a first signal (S1) is sent to the perimeter wire (5) and a second signal (S2) is sent to the search wire (29) and these signals are received by at least one receiver coil (8, 10) of the work unit (1) and recognised and evaluated as different signals (S1, S2) in a controller (18) of the work unit (1),
**characterised in that**, in dependence upon the evaluation of the signals (S1, S2), the traction drive (16) is controlled as follows to carry out a target journey to the charging station (2):
- forward travel of the work unit (1) until it reaches the perimeter wire (5);
- forward travel along the perimeter wire (5) and travel past the charging station (2);
- stop the work unit (1) at the end of travel past the charging station (2);
- reverse travel of the work unit (1) in a curve (40) for longitudinal alignment of the work unit (1) in front of the charging station (2);
- forward travel of the work unit (1) and controlled movement into the charging station (2) until a charging position is reached.

2. Method according to claim 1,
**characterised in that** the charging position of the work unit (1) in the charging station (2) is detected and indicated by a change in the signal (S2) on the search wire (29).

3. Method according to claim 2,
**characterised in that** the traction drive (16, 17) is disconnected in dependence upon the change in the signal (S2) on the search wire (29).

4. Method according to claim 2 or 3,
**characterised in that** the signal (S2) on the search wire (29) is changed in frequency.

5. Method according to one of claims 1 to 4,
**characterised in that** the second signal (S2) transmitted on the search wire (29) lies in the signal pauses (ΔT) of the first signal (S1) transmitted to the perimeter wire (5).

6. Method according to one of claims 1 to 5,
**characterised in that** a recall signal is superimposed with respect to the signal (S1) on the perimeter wire (5).

7. Method according to claim 6,
**characterised in that** the controller (18) initiates a target journey to the charging station (2) after receiving the recall signal.

8. Device comprising a self-propelled, battery-operated work unit (1), having an electric traction drive (16, 17) which is supplied with power from a battery (3) arranged in the work unit (1), and having a charging station (2) for charging the battery (3), wherein the work unit (1) works within an area (6) delimited by a perimeter wire (5), and the charging station (2) has a search wire (29) which crosses the perimeter wire (5) at a predefined angle (32, 33), wherein a first signal (S1) is sent to the perimeter wire (5) and a second signal (S2) is sent to the search wire (29), and these signals are received by at least one receiver coil (8, 10) in the work unit (1) and recognised and evaluated as different signals (S1, S2) in a controller (18) of the work unit (1), and the traction drive (16, 17) of the work unit (1) is controlled in dependence upon the evaluation, wherein the search wire (29) forms a rectangular search loop (25) which lies symmetrically with respect to a longitudinal middle axis (23) through a charging mandrel (34) of the charging station (2).

9. Method according to claim 8,
**characterised in that** the one sides (26) of the search loop (25) lie parallel to a longitudinal middle axis (23) of the charging station (2).

10. Device according to claim 8 or 9,
**characterised in that** the other sides (27) of the search loop (25) lie at an angle to a longitudinal middle axis (23) of the charging station (2).

11. Device according to claim 10,
**characterised in that** the angle (32, 33) is a right angle.

12. Device according to one of claims 8 to 11,
**characterised in that** two receiver coils (8, 10) arranged symmetrically with respect to a longitudinal middle axis (9) are provided in the work unit (1).

13. Device according to claim 12,
**characterised in that** the width (B) of the search loop (25), measured transversely to the longitudinal middle axis (23) of the charging station (2), is greater than the distance (E) of the receiver coils (8, 10).

## Revendications

1. Procédé pour amener dans une station de charge (2) un appareil de travail autopropulsé (1) fonctionnant sur batterie, étant précisé que l'appareil (1) comporte un entraînement électrique de déplacement (16, 17) qui est alimenté à partir d'une batterie (3) et par l'intermédiaire duquel l'appareil (1) est déplacé à l'intérieur d'une surface (6) délimitée par un fil de délimitation de périphérie (5), et avec une station de charge (2) pour charger la batterie (3), étant précisé que la station de charge (2) comporte un fil chercheur (29) qui croise le fil de délimitation de périphérie (5) suivant un angle (32, 33) prédéfini, et qu'un premier signal (S1) est émis vers le fil de délimitation de périphérie (5) et qu'un second signal (S2) est émis vers le fil chercheur (29), lesquels signaux (S1, S2) sont reçus par au moins une bobine de réception (8, 10) de l'appareil (1) et sont détectés et analysés sous la forme de signaux différents (S1, S2) dans une commande (18) dudit appareil (1), **caractérisé en ce qu'**en fonction de l'analyse des signaux (S1, S2), l'entraînement de déplacement (16, 17) est commandé de la manière suivante pour effectuer un trajet de destination jusqu'à la station de charge (2):
- l'appareil (1) avance jusqu'à ce qu'il atteigne le fil de délimitation de périphérie (5);
- l'appareil (1) avance le long du fil de délimitation de périphérie (5) et passe devant la station de charge (2);
- l'appareil (1) s'arrête à la fin de son passage devant la station de charge (2);
- l'appareil (1) recule dans une courbe (40) pour s'aligner longitudinalement devant la station de charge (2);
- l'appareil (1) avance et entre de manière contrôlée dans la station de charge (2) jusqu'à ce qu'il atteigne une position de charge.

2. Procédé selon la revendication 1,
**caractérisé en ce que** la position de charge de l'appareil (1) dans la station de charge (2) est détectée et est indiquée grâce à une variation du signal (S2) sur le fil chercheur (29).

3. Procédé selon la revendication 2,
**caractérisé en ce qu'**en fonction de la variation du signal (S2) sur le fil chercheur (29), l'entraînement de déplacement (16, 17) est arrêté.

4. Procédé selon la revendication 2 ou 3,
**caractérisé en ce que** la fréquence du signal (S2) sur le fil chercheur (29) est modifiée.

5. Procédé selon l'une des revendications 1 à 4,
**caractérisé en ce que** le second signal (S2) émis sur le fil chercheur (29) est situé dans les pauses (ΔT) du premier signal (S1) émis sur le fil de délimitation de périphérie (5).

6. Procédé selon l'une des revendications 1 à 5,
**caractérisé en ce qu'**un signal de rappel est superposé au signal (S1) sur le fil de délimitation de périphérie (5).

7. Procédé selon la revendication 6,
**caractérisé en ce que** la commande (18), après réception du signal de rappel, déclenche un trajet de destination jusqu'à la station de charge (2).

8. Dispositif composé d'un appareil de travail autopropulsé (1) fonctionnant sur batterie avec un entraînement électrique de déplacement (16, 17) qui est alimenté en énergie à partir d'une batterie (3) disposée dans ledit appareil (1), et d'une station de charge (2) pour charger la batterie (3), étant précisé que l'appareil (1) travaille à l'intérieur d'une surface (6) délimitée par un fil de délimitation de périphérie (5) et que la station de charge (2) comporte un fil chercheur (29) qui croise le fil de délimitation de périphérie (5) suivant un angle (32, 33) prédéfini, étant précisé qu'un premier signal (S1) est émis vers le fil de délimitation de périphérie (5) et qu'un second signal (S2) est émis vers le fil chercheur (29), lesquels signaux (S1, S2) sont reçus par au moins une bobine de réception (8, 10) dans l'appareil (1) et sont détectés et analysés sous la forme de signaux différents (S1, S2) dans une commande (18) dudit appareil (1), et qu'en fonction de l'analyse, l'entraînement de déplacement (16, 17) de l'appareil (1) est commandé, étant précisé que le fil chercheur (29) forme une boucle chercheuse rectangulaire (25) qui est symétrique par rapport à un axe longitudinal médian (23) traversant une broche de charge (34) de la station de charge (2).

9. Dispositif selon la revendication 8,
**caractérisé en ce que** des côtés (26) de la boucle chercheuse (25) sont parallèles à l'axe longitudinal médian (23) de la station de charge (2).

10. Dispositif selon la revendication 8 ou 9,
**caractérisé en ce que** les autres côtés (27) de la boucle chercheuse (25) définissent un angle (32, 33) par rapport à un axe longitudinal médian (23) de la station de charge (2).

11. Dispositif selon la revendication 10,
**caractérisé en ce que** l'angle (32, 33) est un angle droit.

12. Dispositif selon l'une des revendications 8 à 11,
**caractérisé en ce qu'**il est prévu dans l'appareil (1) deux bobines de réception (8, 10) disposées symétriquement par rapport à un axe longitudinal médian (9).

13. Dispositif selon la revendication 12,
**caractérisé en ce que** la largeur (B) de la boucle chercheuse (25), mesurée transversalement par rapport à l'axe longitudinal médian (23) de la station de charge (2), est supérieure à l'écartement (E) des bobines de réception (8, 10).
